# EUROPÄISCHE PATENTSCHRIFT

(11) **EP 0 705 392 B1**
(45) Veröffentlichungstag und Bekanntmachung des Hinweises auf die Patenterteilung: **30.06.1999**
(21) Anmeldenummer: 95907642.3
(22) Anmeldetag: 03.02.1995
(51) Int. Cl.: F16C 9/02, B23D 31/00

(54) **VERFAHREN ZUM BRUCHTRENNEN DES LAGERDECKELS EINER MEHRTEILIGEN LAGERANORDNUNG, INSBESONDERE IN KURBELGEHÄUSEN VON BRENNKRAFTMASCHINEN**
PROCESS FOR THE BREAKING SEPARATION OF THE BEARING CAP OF A MULTI-PART BEARING ARRANGEMENT, ESPECIALLY IN INTERNAL COMBUSTION ENGINE CRANK-CASES
PROCEDE DE SEPARATION PAR RUPTURE DU CHAPEAU DE PALIER D'UN ENSEMBLE PALIER A PLUSIEURS ELEMENTS, EN PARTICULIER DANS LES CARTERS DE VILEBREQUIN DE MOTEURS A COMBUSTION INTERNE

(30) Priorität: 16.04.1994 DE 4413255
(43) Veröffentlichungstag der Anmeldung: 10.04.1996
(73) Patentinhaber: Bayerische Motoren Werke Aktiengesellschaft, 80788 München (DE)
(72) Erfinder: EIDENBÖCK, Thomas, A-4400 Steyr (AT); LANDERL, Christian, A-3363 Ulmerfeld-Hausmening (AT); MALISCHEW, Franz, A-4400 Steyr (AT); LUCHNER, Clemens, D-81673 München (DE)
(74) Vertreter: Bücken, Helmut
(86) Internationale Anmeldenummer: EP9500400
(87) Internationale Veröffentlichungsnummer: WO9528573

(56) Entgegenhaltungen:
- WO-A-87/06509
- DE-B- 1 218 213
- US-A- 3 464 746
- US-A- 4 684 267
- US-A- 4 693 139
- US-A- 5 105 538
- US-A- 5 274 919

## Beschreibung

Die Erfindung geht gemäß dem Oberbegriff des Patentanspruches 1 von der US-A-4 684 267 aus.

Dieses Dokument beschreibt ein Verfahren zum Bruchtrennen des Lagerdeckels einer mehrteiligen Lageranordnung in einem Maschinengehäuse einer Brennkraftmaschine, wobei gemäß einem Ausführungsbeispiel die paarweise paßgenau korrespondierenden Bruchtrennflächen von Lagerdeckel und Maschinengehäuse im wesentlichen in einer gemeinsamen Ebene liegen. Weiter wird darauf hingewiesen, daß die Bruchtrennflächen auch geneigt angeordnet werden können. Die Trennung erfolgt durch ein Paar zylindrischer Halbdorne, zwischen denen ein Sprengkeil angeordnet ist.

Für ein Kurbelgehäuse mit V-förmig angeordneten Zylindern ist aus der US-A-1 916 292 eine mehrteilige Lageranordnung bekannt, bei der Lagerdeckel und Maschinengehäuse über spanabhebend bearbeitete Anlageflächen gegeneinander verspannt sind. Die paarweise glattflächig korrespondierenden Anlageflächen sind in miteinander einen stumpfen Winkel einschließenden Ebenen angeordnet zur Reduzierung der Belastung des Kurbelwellen-Lagerdeckels.

Aufgabe der Erfindung ist es, das gattungsgemäße Bruchtrenn-Verfahren derart weiterzuentwickeln, daß auch zueinander geneigt verlaufende Bruchtrennflächen in beliebigen Lageranordnungen erzielbar sind, vorzugsweise für Kurbelgehäuse mit V-förmig angeordneten Zylindern.

Diese Aufgabe wird durch den Patentanspruch 1 gelöst. Die Erfindung ermöglicht in vorteilhafter Weise bei einem Kurbelgehäuse mit V-förmig angeordneten Zylindern und integral angeformten Lagerdeckeln deren Bruchtrennung vom Kurbelgehäuse mit Bruchtrennflächen, die im wesentlichen in zueinander unter einem stumpfen Winkel geneigten Ebenen verlaufen. Der stumpfe Winkel kann gegebenenfalls betragsmäßig dem Supplementärwinkel des V-Winkels zwischen den Zylindern sein. Durch erfindungsgemäß unter einem vorbestimmten stumpfen Winkel α vorbereitete Trennbereiche zwischen Maschinengehäuse und Lagerdeckel werden entsprechend geneigt verlaufende Bruchtrennflächen sicher erzielt durch die weitere erfindungsgemäße Gestaltung des Halbdornes mit einem gegenüber dem der aufnehmenden Lagerbohrung um 0,5 % bis 5 % reduzierten Krümmungsradius. Mit der erfindungsgemäßen Gestaltung des Halbdornes ergibt sich während des Bruchtrennvorganges eine elastische Verformung des Lagerdeckels, die den Verlauf der Bruchtrennung in Richtung der unter einem stumpfen Winkel angeordneten Trennbereiche günstig beeinflußt.

Der Krümmungsradius des Halbdornes kann einen konstanten Wert haben, er kann aber auch zu Erzielung eines teilelliptischen Querschnittes für den Halbdorn veränderlich gewählt werden.

In einer ersten Ausgestaltung des Bruchtrenn-Verfahrens wird dem Halbdorn zur Bruchtrennung des Lagerdeckels in der Lagerbohrung unter Zwischenschaltung eines Sprengkeiles ein weiterer, vorzugsweise identischer Halbdorn zugeordnet und mit dem so gebildeten Spreizdorn in der Lagerbohrung eine Bruchtrennkraft erzeugt.

In weiterer Ausgestaltung des erfinderischen Verfahrens erfolgt eine besonders einfache Ausbildung der Trennbereiche durch mittels Materialabtragung geschaffener Stufen zumindest an einer Stirnseite der Lageranordnung. Diese Stufen bilden in der Lageranordnung einen Querschnittssprung, der in Verbindung mit dem erfindungsgemäß gewählten Krümmungsradius des Halbdornes sicherstellt, daß Bruchtrennflächen in zueinander unter einem stumpfen Winkel geneigten Ebenen erzielt werden. Bei einem groß gewählten stumpfen Winkel a wird der Halbdorn-Krümmungsradius vorzugsweise um 0,5 % bis 1,5 % geringer gewählt als der konstante Krümmungsradius der den Halbdorn aufnehmenden Lagerbohrung.

Im Rahmen der erfindungsgemäßen Ausgestaltung kann ein Lagerdeckel der Lageranordnung an beiden Stirnseiten mit einem Satz Scheibenfräser gleichzeitig bearbeitet werden. Die Durchmesser dieser Fräser können z.B. so groß gewählt werden, daß die damit erzeugten bogenförmigen Stufen einen gemittelten stumpfen Winkel einschließen.

Die Trennbereiche können nach einem anderen Vorschlag auch durch zumindest an einer Stirnseite der Lageranordnung angeordnete rinnenartige Vertiefungen vorbereitet werden.

Die vorbeschriebenen Ausbildungen der Trennbereiche gelten für Lageranordnungen aus einem Eisenwerkstoff, insbesondere für Lageranordnungen in Maschinen- oder Kurbelgehäusen aus einem Gußeisenwerkstoff. Bei einer Lageranordnung aus einer Leichtmetall-Legierung kann der Trennbereich allein oder zusätzlich zu den o.g. Maßnahmen durch eine Fasereinlage vorbereitet werden. Das Verfahren ist im übrigen auch für Lageranordnungen von Pleueln denkbar.

In einer anderen Verfahrensausgestältung kann der lagerdeckelseitige Halbdorn mit einer zur Lageranordnung extern angeordneten Einrichtung verbunden werden zur stufenweise Einwirkung einer Vorspannkraft und einer Bruchtrennkraft.

Schließlich betrifft ein weiterer Vorschlag die Fixierung eines Lagerdeckels mittels Schraubbolzen in der Weise, daß mit diesen in den gegeneinander verspannten Bruchtrennflächen Schubkräfte erzielt werden, die wirksamen Triebwerks-Schubkräften entgegengerichtet sind. Diese Anordnung ist per se für glatte, spanabhebend bearbeitete Anlageflächen von Lagerdeckel und Kurbelgehäuse aus der DE-B 17 50 595 für einen V-Motor bekannt. Die Anwendung dieser bekannten Schraubenanordnung bei einem von einem Maschinengehäuse bruchgetrennten Lagerdeckel verhindert in vorteilhafter Weise eine durch dynamische Querbelastungen mögliche Beschädigung der eine Passung der korrespondierenden Bruchtrennflächen bewirkenden Bruchstruktur dieser Bruchtrennflächen. Erreicht ist damit eine hohe Betriebssicherheit der Lagerdeckel-Anordnung.

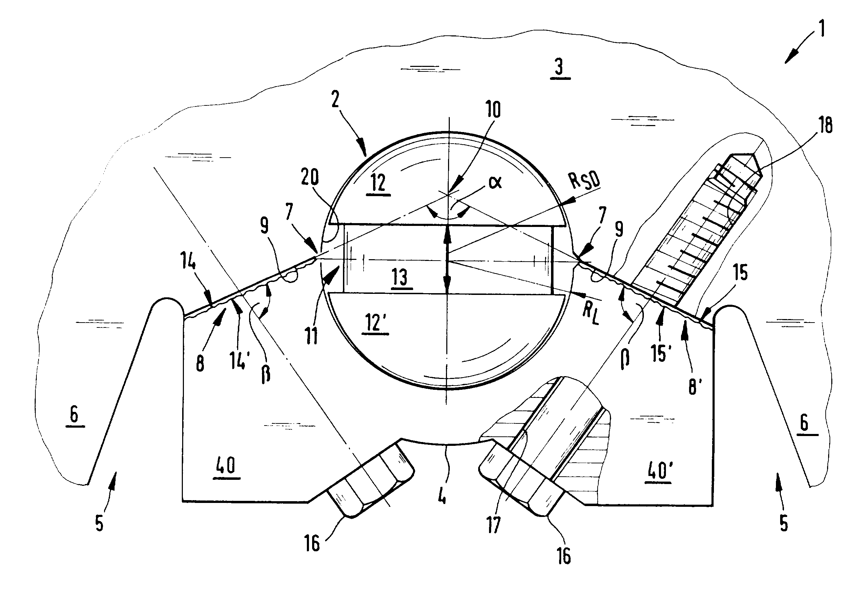

Die Erfindung ist anhand eines in der Zeichnung dargestellten Beispieles beschrieben.

Ein nicht näher dargestelltes Kurbelgehäuse 1 eines V-Motors weist für eine nicht gezeigte Kurbelwelle eine Lageranordnung 2 mit einer Lagerbohrung 20 auf, die anteilig in einem Lagerstuhl 3 und einem Lagerdeckel 4 angeordnet ist. Das Kurbelgehäuse 1 ist als Gußstück ausgebildet mit angegossenem Lagerdeckel 4. Der Lagerdeckel 4 ist in seiner Länge über den Lagerstuhl 3 begrenzt durch mittels Gießen oder spanabhebender Bearbeitung erzeugte Freistellungen 5 gegenüber benachbarten Abschnitten 6 des Lagerstuhles 3 bzw. des Kurbelgehäuses 1. Nach einer spanabhebenden Vorbearbeitung der Lagerbohrung 20 einschließlich der Anordnung von V-förmigen Kerben 7 in diametraler Lage werden im Übergang vom Kurbelgehäuse 1 bzw. Lagerstuhl 3 zum integralen Lagerdeckel 4 zwischen der Lagerbohrung 2 und den durch die Freistellungen 5 i.w. bestimmten Befestigungsflanschen 40, 40' des Lagerdeckels 4 Trennbereiche 8, 8' vorbereitet zum Bruchtrennen des Lagerdeckels 4 vom Kurbelgehäuse 1 bzw. vom Lagerstuhl 3. Die verfahrensmäßige Vorbereitung der Trennbereiche 8, 8' umfaßt Querschnittsänderungen zwischen den benachbarten Bauteilen und/oder eine für das Bruchtrennen förderliche Werkstoffbehandlung.

Bei einem Kurbelgehäuse 1 aus einem Gußeisenwerkstoff werden die Trennbereiche 8, 8' vorzugsweise durch Querschnittsänderungen vorbereitet. Vorteilhaft wird dabei so verfahren, daß die Lageranordnung 2 an beiden Stirnseiten mit einem Satz Scheibenfräser materialabtragend bearbeitet wird. Mit den Scheibenfräsern von gleichen Durchmessern wird der Lagerdeckel 4 über Stufen 9 gegenüber dem Lagerstuhl 3 abgesetzt zur Erzielung von Querschnittssprüngen zur Steuerung des Bruchverlaufes zwischen Lagerstuhl 3 und Lagerdeckel 4. Zur gezielten Bruchauslösung in den durch die Stufen 9 gegebenen Querschnittssprüngen enden die Stufen 9 in den V-förmigen Kerben 7 der Lagerbohrung 20. Anstelle der Stufen 9 sind zur Querschnittsschwächung auch rinnenartige Vertiefungen in den Stirnseiten der Lageranordnung 2 zwischen Lagerstuhl 3 und Lagerdeckel 4 denkbar. Weiter kann der Werkstoff des Kurbelgehäuses 1 in den Trennbereichen 8, 8' zur Steuerung des Bruchverlaufes zusätzlich versprödet werden.

Wie aus der einzigen Figur hervorgeht, schließen die Stufen 9 der Trennbereiche 8, 8' miteinander einen stumpfen Winkel α mit gehäuseseitigem Scheitel 10 ein. Die Stufen 9 können gerade verlaufend ausgebildet sein oder schwach gekrümmt, wie dies beispielsweise mit einem Satz Scheibenfräser von großem Radius erreichbar ist. Zur Bruchtrennung des Lagerdeckels 4 vom Lagerstuhl 3 wird in die Lagerbohrung 20 ein geteilter Spreizdorn 11 eingeführt. Der Spreizdorn 11 umfaßt die Halbdorne 12, 12', zwischen denen ein mechanisch oder hydraulisch beaufschlagbarer Sprengkeil 13 zur Erzeugung einer quer zu den Trennbereichen 8, 8' wirkenden Bruchkraft angeordnet ist.

Wie Versuche eindeutig ergaben, werden die Paare korrespondierender Bruchtrennflächen 14, 14' und 15, 15' von Lagerdeckel 4 und Kurbelgehäuse 1 bzw. Lagerstuhl 3 in miteinander einen stumpfen Winkel a mit gehäuseseitigem Scheitel 10 einschließenden Trennbereichen 8, 8' einwandfrei mittels des Spreizdornes 11 erzeugt, wenn der Krümmungsradius R_{SD} des Halbdornes 12' in Abhängigkeit des jeweiligen stumpfen Winkels α um 0,5 % - 5 %, vorzugsweise 0,5 % - 1,5 % bei großem stumpfen Winkel (α) geringer gewählt wird als der konstante Krümmungsradius R_{L} der den Halbdorn 12' aufnehmenden Lagerbohrung 20. Mit einem erfindungsgemäß angepaßten Halbdorn 12' des Spreizdornes 11 werden unter einem stumpfen Winkel α verlaufende Bruchtrennflächen 14, 14' und 15, 15' in entsprechend erfindungsgemäß ausgebildeten Trennbereichen 8, 8' sicher erzielt. Hierfür kann auch ein veränderlicher Krümmungsradius R_{SD} für den Halbdorn 12' im Bereich der Auflage in der Lagerbohrung 20 vorteilhaft sein.

Mit der Erfindung ist es somit möglich, bei einem Kurbelgehäuse mit V-förmig angeordneten Zylindern Lagerdeckel 4 durch Bruch vom Gehäuse 1 abzutrennen zur Erzielung paßgenau korrespondierender Bruchtrennflächen 14, 14' und 15, 15' zum wiederholbaren Fügen des Lagerdeckels 4 mit dem Gehäuse 1 ohne zusätzliche Passungsmittel.

Um bei der Bruchtrennung des Lagerdeckels 4 im zuletzt brechenden Trennbereich 8 oder 8' nahe einer der Freistellungen 5 einen die Qualität der Bruchtrennflächen 14, 14' oder 15, 15' nachteilig beeinflussenden Biegebruch zu vermeiden, wird der Lagerdeckel 4 während des gesamten Bruchtrenn-Vorganges in bekannter Weise rotationsfrei geführt.

Anstelle des Sprengkeiles 13 kann zwischen den Halbdornen 12, 12' auch eine hydraulische Kolben-Zylinder-Einrichtung dienen, wie sie aus der US 4 754 906 zur Erzeugung einer Bruchtrennkraft in einer Lageranordnung bekannt ist.

Wie aus der Figur weiter hervorgeht, wird der Lagerdeckel 4 mittels Schraubbolzen 16 am Kurbelgehäuse 1 bzw. am Lagerstuhl 3 fixiert. Die Schraubenanordnung ist so getroffen, daß die Schraubbolzen 16 aufnehmende Bohrungen 17, 18 im Gehäuse 1 und Lagerdeckel 4 zu den paarweisen Bruchtrennflächen 14, 14' und 15, 15' derart geneigt angeordnet sind - Winkel β -, daß in den gegeneinander verspannten Bruchtrennflächen 14, 14' und 15, 15' aus der Lagerdeckel-Verspannung resultierende Schubkräfte den in der Lagerbohrung 20 wirksamen Triebwerks-Schubkräften entgegengerichtet sind. Diese Schraubenanordnung verhindert in vorteilhafter Weise eine durch dynamische Querbelastungen mögliche Beschädigung der eine Passung der korrespondierenden Bruchtrennflächen bewirkenden Bruchstruktur der Bruchtrennflächen 14, 14' und 15, 15'. Erreicht wird damit eine hohe Betriebssicherheit der Lagerdeckel-Anordnung.

Das erfindungsgemäße Bruchtrenn-Verfahren kann vorteilhaft auch bei einem Maschinen- oder Kurbelgehäuse aus einer Leichtmetall-Legierung Anwendung finden, insbesondere mit durch Fasereinlagen ausgebildeten Trennbereichen.

Das erfindungsgemäße Verfahren kann außer bei Maschinengehäusen zum Beispiel auch bei Pleueln, insbesondere für Hubkolbenmaschinen, Verwendung finden.

## Patentansprüche

1. Verfahren zum Bruchtrennen des Lagerdeckels einer mehrteiligen Lageranordnung, insbesondere in Kurbelgehäusen von Brennkraftmaschinen,
- bei dem ein mit einem Teil (3) der Lageranordnung (2) über Befestigungsflansche (40, 40') integral verbundener Lagerdeckel (4) mittels eines im wesentlichen schlagartig belastbaren, im deckelseitigen Lagerbohrungsabschnitt aufliegenden Halbdornes (12') getrennt wird zur Erzeugung paßgenau korrespondierender Bruchtrennflächen (14, 14'; 15, 15') in durch Querschnittsänderung und/oder Werkstoffbehandlung vorbereiteten Trennbereichen (8, 8') der Befestigungsflansche (40, 40'),
dadurch gekennzeichnet,
- daß die Paare korrespondierender Bruchtrennflächen (14, 14'; 15, 15') von Lagerdeckel (4) und übrigem Teil (3) der Lageranordnung (2) in miteinander einen stumpfen Winkel (α) einschließenden Trennbereichen (8, 8') erzeugt werden durch zumindest einen Halbdorn (12'), dessen
- Krümmungsradius (R_{SD}) im Bereich der Auflage in der Lagerbohrung (20) in Abhängigkeit des jeweiligen stumpfen Winkels (α) um 0,5 % - 5 % geringer gewählt wird als der konstante Krümmungsradius (R_{L}) der den Halbdorn (12') aufnehmenden Lagerbohrung (20).

2. Verfahren nach Anspruch 1, dadurch gekennzeichnet, daß für den Halbdorn (12') ein veränderlicher Krümmungsradius (R_{SD}) gewählt wird.

3. Verfahren nach Anspruch 1 bis 2, dadurch gekennzeichnet, daß der Krümmungsradius (R_{SD}) des Halbdornes (12') bei relativ großem Winkel (α) um 0,5 % - 1,5 % geringer gewählt wird.

4. Verfahren nach den Ansprüchen 1 bis 3, dadurch gekennzeichnet, daß dem Halbdorn (12') zur Bruchtrennung des Lagerdeckels (4) in der Lagerbohrung (20) unter Zwischenschaltung eines Sprengkeiles (13) ein weiterer Halbdorn (12) zugeordnet wird zur Bewirkung einer mit dem so gebildeten Spreizdorn (11) in der Lagerbohrung erzeugten Bruchtrennkraft.

5. Verfahren nach den Ansprüchen 1 bis 4, dadurch gekennzeichnet,
- daß die Trennbereiche (8, 8') durch zumindest an einer Stirnseite der Lageranordnung (2) mittels Materialabtragung angeordnete Stufen (9) gebildet werden, die
- mit in der Lagerbohrung (20) angeordneten Kerben (7) in Verbindung stehen.

6. Verfahren nach den Ansprüchen 1 bis 4, dadurch gekennzeichnet,
- daß die Trennbereiche (8, 8') durch zumindest an einer Stirnseite der Lageranordnung (2) angeordnete rinnenartige Vertiefungen gebildet werden, die
- mit in der Lagerbohrung (20) angeordneten Kerben (7) in Verbindung stehen.

7. Verfahren nach den Ansprüchen 1 bis 6, gekennzeichnet durch die Anwendung bei einer Lageranordnung (2) aus einem Eisenwerkstoff, insbesondere bei Maschinen- oder Kurbelgehäusen aus einem Gußeisenwerkstoff.

8. Verfahren nach den Ansprüchen 1 bis 6, gekennzeichnet durch die Anwendung bei einer Lageranordnung (2) aus einer Leichtmetall-Legierung, wobei in den Trennbereichen (8, 8') gegebenenfalls Fasereinlagen vorgesehen werden.

9. Verfahren nach einem oder mehreren der Ansprüche 1 bis 8, dadurch gekennzeichnet, daß der lagerdeckelseitige Halbdorn (12') mit einer zur Lageranordnung (2) extern angeordneten Einrichtung verbunden wird zur stufenweisen Einwirkung einer Vorspannkraft und einer Bruchtrennkraft.

10. Lageranordnung nach einem oder mehreren der Verfahrensansprüche 1 bis 9,
- mit einem durch Schraubbolzen fixierbaren Lagerdeckel,
dadurch gekennzeichnet,
- daß die Schraubbolzen aufnehmende Bohrungen (17, 18) in der Lageranordnung (2) zu den paarweisen Bruchtrennflächen (14, 14', 15, 15') derart geneigt angeordnet sind (Winkel β),
- daß in den gegeneinander verspannten Bruchtrennflächen aus der Verspannung des Lagerdeckels (4) resultierende Schubkräfte den in der Lagerbohrung (20) wirksamen Triebwerks-Schubkräften entgegengerichtet sind.

## Claims

1. A method for the break-out separation of the bearing cap of a multi-part bearing arrangement, especially in the crankcases of internal combustion engines,
- in which a bearing cap (4) integrally joined with a part (3) of the bearing arrangement (2) via fastening flanges (40, 40') is separated by the use of a half mandrel (12') positioned in the cap side bearing boring section, which can essentially be loaded abruptly, to create exactly matching corresponding break-out separation surfaces (14, 14'; 15, 15') in separation regions (8, 8'), prepared by cross section changes and/or material handling of the fastening flanges (40, 40'),
characterised in that,
- the pairs of corresponding break-out separation surfaces (14, 14'; 15, 15') of the bearing cap (4) and the other part (3) of the bearing arrangement (2) are generated in separation areas (8, 8') enclosing an obtuse angle (α) between them by at least one half mandrel (12'), whose
- radius of curvature (R_{SD}) in the region of its positioning in the bearing boring (20) is chosen in dependency on the individual obtuse angle (α) to be 0.5% - 5% smaller than the constant radius of curvature (R_{L}) of the bearing boring (20), accepting the half mandrel (12').

2. A method according to Claim 1, characterised in that a variable radius of curvature (R_{SD}) is selected for the half mandrel (12').

3. A method according to Claims 1 to 2, characterised in that the radius of curvature (R_{SD}) of the half mandrel (12') is selected to be 0.5% - 1.5% smaller with a relatively large angle (α).

4. A method according to Claims 1 to 3, characterised in that the half mandrel (12') for break-out separation of the bearing cap (4) is attached to a further half mandrel (12) in the bearing boring (20), with the interposition of a bursting wedge (13) to effect a break-out separation force using the expanding mandrel (11) thus formed.

5. A method according to Claims 1 to 4, characterised in that,
- the separation areas (8, 8') are formed by means of steps (9) arranged by material removal at least on the front side of the bearing arrangement (2), which
- are in connection with notches (7), arranged in the bearing boring (20).

6. A method according to Claims 1 to 4, characterised in that
- the separation areas (8, 8') are formed by channel like depressions at least on a front side of the bearing arrangement (2), which
- are in connection with the notches (7) arranged in the bearing boring (20).

7. A method according to Claims 1 to 6, characterised by application in a bearing arrangement (2) from a ferrous material, especially in engines or crankcases of a cast iron material.

8. A method according to Claims 1 to 6, characterised by application in a bearing arrangement (2) of a light metal alloy, whereby in the separation areas (8, 8') fibre inserts are possibly provided.

9. A method according to one or more of the Claims 1 to 8, characterised in that the half mandrel on the bearing cap side (12') is joined to a device arranged externally to the bearing arrangement (2) for the staged exercise of a pre-tensioning force and a break-out force.

10. A bearing arrangement according to one or more of the Method Claims 1 to 9,
- with a bearing cap which can be fixed by screw bolts,
characterised in that,
- the borings (17, 18) to accept the screw bolts in the bearing arrangement (2) to the paired break-out separation surfaces (14, 14'; 15, 15') are arranged to be inclined (angle β),
- the resultant compression forces in the mutually opposed break-out separation surfaces from the tensioning of the bearing cap (4) are directed against the effective engine compression forces in the bearing boring (20).

## Revendications

1. Procédé de séparation par rupture du chapeau de palier d'un dispositif de palier en plusieurs parties notamment pour des carters de vilebrequin de moteurs à combustion interne selon lequel, un chapeau de palier (4) faisant corps avec le dispositif de palier (2) par une bride de fixation (40, 40'), est séparé à l'aide d'une demi-broche (12'), sollicitée essentiellement de façon brutale, et s'appuyant dans le segment de perçage de palier du côté du couvercle, pour générer des surfaces de séparation de rupture (14, 14', 15, 15') se correspondant de façon ajustée, dans des zones de séparation (8, 8') des brides de fixation (40, 40') préparées par variation de section et/ou traitement de la matière,
caractérisé en ce que
les paires de surfaces de séparation de rupture correspondantes (14, 14' 15, 15') du chapeau de palier (4) et de la partie restante (3) du dispositif de palier (2) sont réalisées dans des zones de rupture faisant entre elles un angle obtus (α) par au moins une demi-broche (12') dont le rayon de courbure (R_{SD}) dans la zone d'appui dans le perçage de palier (20) est diminué de 0,5 % à 5 % en fonction de l'angle obtus (α) respectif, par rapport au rayon de courbure constant (R_{L}) du perçage de palier (20) recevant la demi-broche (12').

2. Procédé selon la revendication 1,
caractérisé en ce qu'
on choisit un rayon de courbure variable (R_{SD}) pour la demi-broche (12').

3. Procédé selon l'une des revendications 1 à 2,
caractérisé en ce qu'
on choisit un rayon de courbure (R_{SD}) de la demi-broche (12') qui est diminué de 0,5 % à 1,5 % pour un angle (α) relativement grand.

4. Procédé selon l'une des revendications 1 à 3,
caractérisé en ce que
pour la séparation par rupture du chapeau de palier (4), on associe à la demi-broche (12'), dans le perçage de palier (20) avec interposition d'un coin d'éclatement (13), une autre demi-broche (12) pour produire la force de séparation de rupture dans le passage de palier avec la broche d'écartement (11) ainsi formée.

5. Procédé selon l'une des revendications 1 à 4,
caractérisé en ce que
- les zones de séparation (8, 8') sont formées par au moins un gradin (9) prévu sur la face frontale du dispositif de palier (2) par enlèvement de matière,
- ces gradins étant reliés au perçage de palier (20) par des encoches (7).

6. Procédé selon l'une des revendications 1 à 4,
caractérisé en ce que
- les zones de séparation (8, 8') sont formées par des cavités en rainures prévues sur au moins une face frontale du dispositif de palier (2) et,
- ces cavités communiquent avec des encoches (7) prévues dans le perçage de palier (20).

7. Procédé selon l'une des revendications 1 à 6,
caractérisé par
son application à un dispositif de palier (2) en fer notamment pour des carters de moteur ou de vilebrequin en fonte de fer.

8. Procédé selon l'une des revendications 1 à 6,
caractérisé
par l'application d'un dispositif de palier (2) en un alliage de métal léger, et les zones de séparation (8, 8') comportant le cas échéant des congés.

9. Procédé selon l'une ou plusieurs des revendications 1 à 8,
caractérisé en ce que
la demi-broche (12') du côté du chapeau de palier est reliée à une installation externe par rapport au dispositif de palier (2) pour agir par gradins sous l'effet d'une force de précontrainte et d'une force de séparation de rupture.

10. Dispositif de palier obtenu par la mise en oeuvre du procédé selon l'une des revendications 1 à 9 avec un chapeau de palier bloqué par des vis,
caractérisé en ce que
- les perçages (17, 18) recevant les vis dans le dispositif de palier (2) sont inclinés par rapport aux surfaces de séparation de rupture par paires (14, 14' 15, 15') pour faire entre elles un angle (β),
- dans les surfaces de séparation de rupture serrées l'une contre l'autre, les forces de poussée résultant du serrage du chapeau de palier (4) s'opposent aux forces de poussée du moteur agissant sur le perçage de palier (20).
